Europäisches Patentamt

European Patent Office

Office européen des brevets

(19)

(11) Publication number: **0 102 805**
**B1**

(12) **EUROPEAN PATENT SPECIFICATION**

(45) Date of publication of patent specification: **12.10.88**

(51) Int. Cl.⁴: **B 23 B 31/16**

(21) Application number: **83304876.2**

(22) Date of filing: **24.08.83**

(54) **Work holding devices.**

(30) Priority: **28.08.82 GB 8224770**

(43) Date of publication of application:
**14.03.84 Bulletin 84/11**

(45) Publication of the grant of the patent:
**12.10.88 Bulletin 88/41**

(84) Designated Contracting States:
**DE FR GB IT**

(56) References cited:
**CH-A- 223 584**
**DE-A-1 777 371**
**DE-A-1 924 062**
**DE-A-2 546 746**
**DE-C- 963 288**

(73) Proprietor: **Pratt Burnerd International Limited**
**Park Works, Lister Lane**
**Halifax West Yorkshire HXI 5JH (GB)**

(72) Inventor: **Jackson, Joseph Fenwick**
**1 West Royd Villas**
**Halifax West Yorkshire (GB)**
Inventor: **Pickles, Kenneth Bailey Philip**
**15 Pye Nest Road**
**Halifax West Yorkshire (GB)**

(74) Representative: **Neill, Alastair William et al**
**Appleyard Lees & Co. 15 Clare Road**
**Halifax West Yorkshire HX1 2HY (GB)**

Courier Press, Leamington Spa, England.

## Description

The invention relates to work holding devices such as chucks.

Rotatable work holding devices such as chucks are known which are operated by fluid pressure which is supplied to a stationary slip ring.

When the work holding device is itself stationary fluid can be supplied from the slip ring to the work holding device. Sealing means must be provided between the slip ring and the work holding device. However the sealing means must not remain in contact with the work holding device once the device has been caused to grip a workpiece and starts to rotate, otherwise the sealing means would burn out. The sealing means is therefore normally biased out of contact with the work holding device and is arranged so that when fluid pressure is applied to the slip ring for transmission to the work holding device part of the fluid forces the sealing means against the work holding device.

DE—C—963 288 shows an arrangement in which the sealing means is operated by the main fluid pressure but a fluid flow passage is needed through the sealing means and the actuation of the sealing means is not very positive.

The invention provides a rotatable work holding device comprising a chuck body having passage means for transmission of fluid pressure to operate the work holding device, a slip ring for the distribution of fluid pressure to the passage means, and sealing means between the slip ring and the work holding device, characterised in that, in addition to first passage means for operating the work holding device, there is second passage means for operating the seals, such that a negative pressure is applied therethrough to retract the seals out of contact with the chuck body and a positive pressure is applied to force the seals against the chuck body, the first and second passage means being separate and distinct from each other and having respective separate and distinct inlets. The provisions of separate and district passage means to operate the sealing means makes it possible to use sealing means without a passage therethrough and to achieve more positive actuation of the seal.

By way of example, a specific embodiment of the invention will now be described, with reference to the accompanying drawings, in which:

Figure 1a is the upper portion of a cross-section through an embodiment of chuck according to the invention;

Figure 1b is the lower portion of the cross-section through the embodiment; and

Figure 2 and 3 are cross-sections through part of the chuck at different circumferential locations.

The chuck illustrated in the Figures comprises a generally cylindrical body 10 which may be mounted on a spindle of a machine tool for rotation at high speed. The mechanism for gripping a workpiece in the chuck does not comprise part of the present invention and will not be described in detail. It is however described in our co-pending European application No. 0102236 of even date.

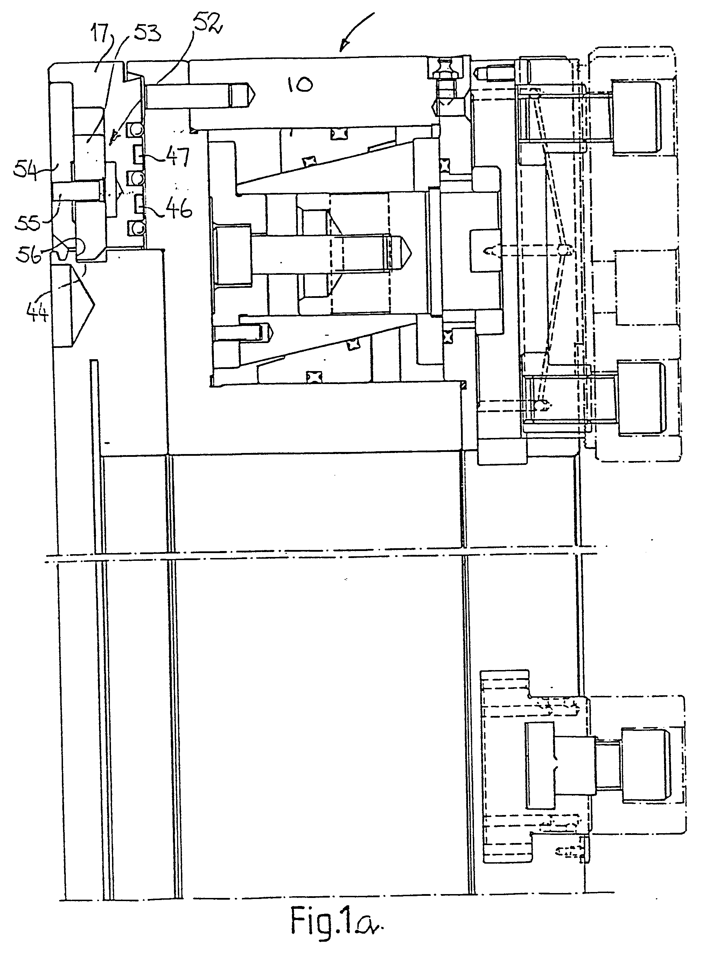

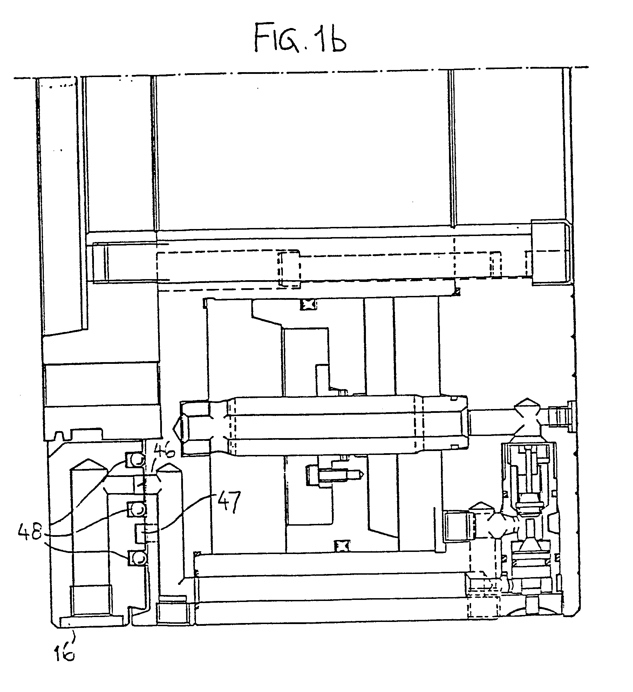

The present invention is concerned with a stationary slip ring 17 which surrounds the body of the chuck. However in order not to unduly increase the radial dimensions of the chuck the slip ring 17 is recessed radially inwardly as is evident from Figures 1a and 1b. The ring is supported on the chuck body by means of three bearings spaced apart equally in the circumferential direction, one of the bearings being illustrated at 40 in Figure 2. Each bearing comprises a cam follower in the form of a roller 41 which runs on bearings 42 on a spindle 43 fixed to the ring 17. Each wheel 41 engages in a track 44 extending around the periphery of a part 45 of the chuck body.

Recessed into the slip ring 17 are two anular compressed air distribution passages 46 and 47. When compressed air is supplied to passage 46, the jaws of the chuck are moved in one direction, and when air is supplied to the other passage 47, the jaws of the chuck are moved in the opposite direction. As can be seen from Figure 1b, air can be supplied to passage 46 through an inlet 16. Air can also be supplied when necessary, through a similar inlet arranged at a different circumferential location, through the passage 47.

It is necessary for the passages 46 and 47 to be separated by seals from each other and from the atmosphere. Three 'O' ring seals 48 are therefore provided, one between the passages 46 and 47 and one on each side of the passages. The seals are accommodated in recesses in the slip ring 17.

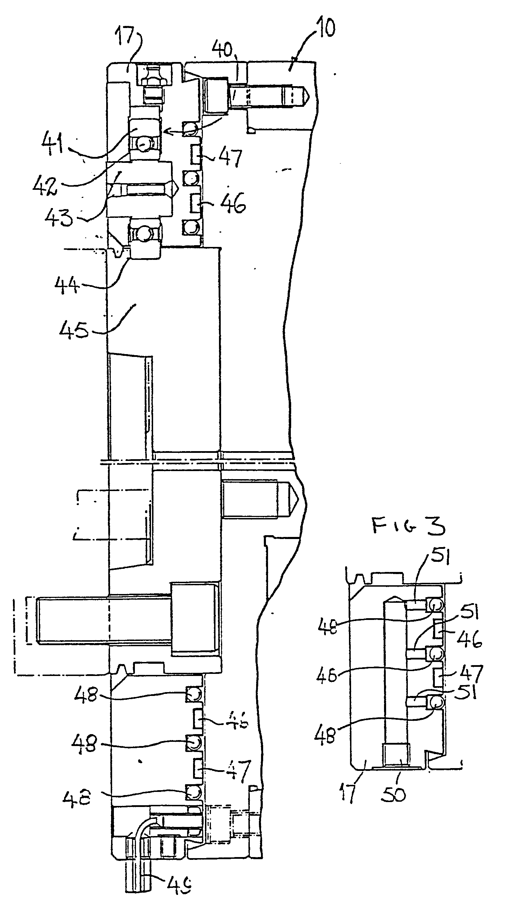

When it is desired to apply fluid pressure to the chuck to open or close the jaws, control means (not shown) are operated. An electric pick-up 49 (shown at the foot of Figure 2) is mounted in the slip ring and is sensitive to the passage of holes provided in the body of the chuck. If the pick-up fails to detect the presence of a hole within a given period of time then this indicates that the chuck is stationary and that it is safe to operate the chuck. The control means then applies fluid pressure through an inlet 50 shown in Figure 3. The inlet 50 has three branches 51 which communicate with the bottom of the recesses housing the seals 48. Thus fluid pressure forces the seals 48 against the body of the chuck.

Fluid pressure can then be applied to the passage 46 or passage 47, as desired, to operate the chuck, for example as described in our co-pending Patent Application No. 0102236 of even date.

Once the chuck has been opened or closed as desired, it is necessary to ensure that the seals 48 are retracted away from the body of the chuck before rotation of the chuck recommences, otherwise the seals would burn out because of frictional heating. Retraction of the seals is achieved by applying suction to the inlet 50, which sucks the seals 48 away from the chuck body.

The means to apply suction is not critical to the invention and many for example comprise a vacuum pump or a venturi device.

When air pressure is applied to open or close the chuck, forces are applied at the radially extending interface between the slip ring 17 and the chuck body, which tends to force the slip ring 17 away from the chuck body in the left-hand direction as viewed in the Figures.

The engagement of the wheels 41 in the track 44 may be insufficient to resist this tendency for movement without causing damage to the bearings 42. Three abutment devices are therefore provided, equally spaced apart around the periphery of the chuck, each abutment device lying between two of the bearings 40. One of the abutment devices 52 is shown in Figure 1a.

The abutment device 52 comprises a metal block 53 which fits within a recess provided in the slip ring and is clamped against the slip ring by a cover plate 54 which is fastened over the recess by bolts (not shown). A pin 55 secured to the cover plate engages in an aperture in the block 53 to prevent radial movement of the block 53.

The block 53 has an abutment face 56 which is ground down so that when the chuck is in use it is just clear of the left-hand radially extending face of the track 44. This is to avoid undesirable rubbing contact between the block 53 and the body of the chuck during rotation of the chuck.

When air pressure is applied to open and close the chuck in its stationary condition however, the slightest left-hand movement of the slip ring 17 brings the abutment face 56 into contact with the left-hand radial face of the track 44, thus preventing any further movement of the slip ring.

The invention is not restricted to the details of the foregoing embodiment. For instance, instead of using the abutment blocks 53, studs or other abutment devices could be provided which project axially from the slip ring 17 to abut against the headstock or other part of the machine tool to which the chuck is to be fitted. The axial length of these devices could be adjustable.

Although the use of three abutment blocks has been described, a different number may be used, or alternative means may be provided to ensure that the slip ring 17 gains support either from the machine tool itself or from the body of the chuck. For example, the slip ring 17 may be provided with a continuous flange-like abutment ring which engages with part of the chuck body.

If desired, the recesses which house the O-ring seals 48 may be inclined slightly to the axial direction, so that the bottom of each recess lies slightly nearer to the centre of the chuck than the mouth of the recess. With such an arrangement the resilience of the seals may tend to bias them into the bottom of the recesses, i.e. away from the body of the chuck.

## Claims

1. A rotatable work holding device comprising a chuck body (10) having passage means for the transmission of fluid pressure to operate the work holding device, a slip ring (17) for the distribution of fluid pressure to the passage means, and sealing means (48) between the slip ring and the work holding device, characterised in that, in addition to first passage means (46, 47) for operating the work holding device, there is second passage means (51) for operating the seals, such that a negative pressure is applied therethrough to retract the seals out of contact with the chuck body and a positive pressure is applied to force the seals against the chuck body, the first and second passage means being separate and distinct from each other and having respective separate and distinct inlets (16) and (50).

2. A rotatable work holding device as claimed in Claim 1, in which the second passage means (51) communicatges with a chamber containing the sealing means (48), such that application of negative pressure to the chamber retracts the sealing means (48) and application of positive pressure to the chamber positively applies the sealing means (48) against the work holding device.

3. A rotatable work holding device as claimed in Claim 2, in which the separate passage means (51) and the chamber containing the sealing means (48) are arranged in the slip ring (17).

## Patentansprüche

1. Drehbare Werkstückhaltevorrichtung mit einem Futterkörper (10), der einen Durchgang zum Übertragen eines Mediumdruckes aufweist, um die Werkstückhaltevorrichtung zu betrieben, mit einem Gleitring (17) zum Verteilen des Mediumdruckes zum Durchgang sowie mit einer Dichtung (48) zwischen dem Gleitring und der Werkstückhaltevorrichtung, dadurch gekennzeichnet, daß außer dem ersten Durchgang (46, 47) zum Betrieben der Werkstückhaltevorrichtung ein zweiter Durchgang (51) zum Betreiben der Dichtungen ist, derart, daß ein negativer Druck hierdurch aufgebracht wird, um die Dichtungen außer Eingriff mit dem Futterkörper zu bringen, und daß ein positiver Druck aufgebracht ist, um die Dichtungen gegen den Futterkörper anzudrükken, und daß der erste und der zweite Durchgang voneinander getrennt und jeweils für sich ausgeführt sind und entsprechende getrennte und für sich ausgeführte Einlässe (16) und (50) haben.

2. Drehbarer Werkstückhalter nach Anspruch 1, dadurch gekennzeichnet, daß der zweite Durchgang (51) mit einer Kammer kommuniziert, die die Dichtung enthält, derart, daß das Aufbringen eines negativen Druckes auf die Kammer die Dichtung (48) zurückzieht, und daß das Aufbringen eines positiven Druckes auf die Kammer die Dichtung (48) positiv gegen die Werkstückhaltevorrichtung andrückt.

3. Drehbare Werkstückhaltevorrichtung nach Anspruch 2, dadurch gekennzeichnet, daß der getrennte Durchgang (51) und die Kammer, die die Dichtung (48) enthält, im Gleitring (17) angeordnet sind.

## Revendications

1. Dispositif porte-pièce tournant comprenant un corps de mandrin (10) qui présente des moyens de passage permettant de transmettre une pression de fluide pour actionner le dispositif porte-pièce, une bague glissante (17) destinée à transmettre le pression de fluide aux moyens de passage, et des moyens d'étanchéité (48) interposés entre la bague glissante et le dispositif porté-pièce, caractérisé en ce que, en supplément des premiers moyens de passage (46, 47) qui servent à actionner le dispositif porte-pièce, il est prévu des deuxièmes moyens de passage (51) servant à actionner les garnitures d'étanchéité, de telle manière qu'une pression négative soit transmise par l'intermédiaire de ces deuxièmes moyens pour rétracter les garnitures d'étanchéité en les éloignant du contact avec le corps du mandrin, et qu'une pression positive soit transmise pour appliquer les garnitures d'étanchéité à force contre le corps du mandrin, les premiers et deuxièmes moyens de passage étant séparatés et distincts les uns des autres et possédant des entrées respectives (16) et (50) séparées et distinctes.

2. Dispositif porte-pièce tournant selon la revendication 1, dans lequel les deuxièmes moyens de passage (51) communiquent avec une chambre qui contient des moyens d'étanchéité (48) de telle manière que la transmission d'une pression négative à la chambre rétracte les moyens d'étanchéité (48) et que la transmission d'une pression positive à la chambre applique positivement les moyens d'étanchéité (48) contre le dispositif porte-pièce.

3. Dispositif porte-pièce tournant selon la revendication 2, dans lequel les moyens de passage séparés (51) et la chambre qui contient les moyens d'étanchéité (48) sont agencés dans la bague glissante (17).

Fig.1a.

FIG. 1b

FIG 3